# EUROPÄISCHE PATENTSCHRIFT

(11) **EP 2 532 939 B1**
(45) Veröffentlichungstag und Bekanntmachung des Hinweises auf die Patenterteilung: **03.10.2018**
(21) Anmeldenummer: 12171355.6
(22) Anmeldetag: 08.06.2012
(51) Int. Cl.: F16M 11/14, F16M 13/02

(54) **Vorrichtung für eine hängende Befestigung eines Projektors**
Device for a suspended fixing of a projector
Dispositif pour une fixation suspendue d'un projecteur

(30) Priorität: 10.06.2011 DE 102011077356
(43) Veröffentlichungstag der Anmeldung: 12.12.2012
(73) Patentinhaber: Projektor Deutschlandvertriebs AG, 48282 Emsdetten (DE)
(72) Erfinder: Schneider, Markus, 50735 Köln (DE)
(74) Vertreter: Isarpatent

(56) Entgegenhaltungen:
- WO-A1-2006/033494
- GB-A- 2 437 850
- US-A1- 2005 218 273
- US-B1- 6 595 482

## Beschreibung

### Gebiet der Erfindung

Die Erfindung betrifft eine Vorrichtung für eine hängende Befestigung eines Projektors.

### Technischer Hintergrund

Obwohl die vorliegende Erfindung zum Aufhängen unterschiedlichster Geräte aus den Bereichen der Gebrauchs- und Unterhaltungselektronik an einer Zimmerdecke oder einem anderen Teil eines Gebäudes oder auch an einem Möbelstück nützlich sein kann, werden die vorliegende Erfindung und die ihr zugrunde liegende Problematik nachfolgend in Bezug auf das Aufhängen eines Videoprojektors oder eines so genannten Beamers an einer Zimmerdecke näher erläutert.

Es ist bekannt, Videoprojektoren an einer Decke eines Zimmers oder Vortragssaals aufzuhängen, um ein Bild auf eine Wand oder auf eine an der Wand befestigte Projektionsfläche zu projizieren. Eine hängende Befestigung eines Videoprojektors erweist sich gegenüber einem Aufstellen des Projektors beispielsweise auf einem Tisch oftmals als vorteilhaft. Die Aufstellung auf einem Tisch ist platzraubend, und der meist kostspielige Projektor kann durch Unachtsamkeit vom Tisch gestoßen werden, wobei er zumeist beschädigt oder zerstört wird. Bei einer Befestigung des Projektors an der Decke hingegen ist dieser besser gegen derartige Unfälle geschützt.

Eine Vorrichtung zum Befestigen eines Projektors an einer Decke ist zum Beispiel in der DE 100 44 213 C2 und in GB2437850 beschrieben. Die dort gezeigte Befestigungsvorrichtung weist mehrere verschwenkbare Arme mit jeweils einem Befestigungspunkt für den Projektor auf. Heutzutage übliche Videoprojektoren oder Beamer, bei denen eine Deckenbefestigung praktiziert wird, sind relativ schwer und können ein Gewicht zwischen etwa 5 kg und 10 kg aufweisen. Daher erfolgt die Deckenbefestigung von Videoprojektoren bislang mittels einer Mehrpunkt-Verbindung, wie bei der vorstehend genannten herkömmlichen Halterung.

In jüngster Zeit gibt es eine Entwicklung hin zu kleineren und leichteren Videoprojektoren. Diese haben ein oftmals viel geringeres Gewicht von ca. 1 kg bis etwa 2,5 kg. Derartige Projektoren werden auch als Mini-Beamer oder Pocket-Projektoren bezeichnet und in der Regel stehend vor der Projektionsfläche aufgebaut. Auch bei den Mini-Beamern ist ein solches Aufstellen jedoch oft unpraktisch und führt dazu, dass auch Mini-Beamer leicht durch Unvorsicht beschädigt oder zerstört werden können.

Es wäre daher wünschenswert, auch derartige neuartige, leichte und kleine Projektoren sicher hängend an einer Zimmerdecke befestigen zu können. Herkömmliche Befestigungsvorrichtungen oder Halterungen für Videoprojektoren sind jedoch für die bislang üblichen, schweren Videoprojektoren ausgelegt und daher für Mini-Beamer meist viel zu aufwändig und massiv ausgeführt. Meist wirken diese Vorrichtungen daher wuchtig und unästhetisch, was gerade dann, wenn der Projektor im Privathaushalt, zum Beispiel zur Realisierung eines Heimkinos im Wohnbereich oder für Video- und Onlinespiele, zum Einsatz kommen soll, mitunter störend sein kann. Ferner lassen sich herkömmliche Vorrichtungen für das hängende Befestigen von Projektoren nicht zweckmäßig und komfortabel mit einem Mini-Beamer verbinden.

Dies ist ein Zustand, den es zu verbessern gilt.

### Zusammenfassung der Erfindung

Vor diesem Hintergrund liegt der vorliegenden Erfindung die Aufgabe zugrunde, eine Vorrichtung für eine hängende Befestigung eines Projektors anzugeben, die sich für ein zuverlässiges und komfortables Aufhängen eines Mini-Beamers oder Pocket-Projektors eignet.

Diese Aufgabe wird erfindungsgemäß durch eine Vorrichtung mit den Merkmalen des Patentanspruchs 1 gelöst.

Gemäß der vorliegenden Erfindung wird eine Vorrichtung für eine hängende Befestigung eines Projektors vorgeschlagen, die mit einer Verbindungseinrichtung ausgestattet ist, welche derart ausgebildet ist, dass sie eine Einpunkt-Verbindung mit dem Projektor ermöglicht.

Unter einer Einpunkt-Verbindung soll im Rahmen der vorliegenden Anmeldung verstanden werden, dass die Verbindungseinrichtung der Vorrichtung und der Projektor nicht, wie bei herkömmlichen Befestigungsvorrichtungen, an mehreren Stellen miteinander verbunden werden, sondern dass die Verbindung mit dem Projektor stattdessen nur an einer Stelle hergestellt wird.

Die der Erfindung zugrunde liegende Erkenntnis besteht darin, dass bei Mini-Beamern aufgrund des geringen Gewichts derselben eine Einpunkt-Verbindung ausreicht, um den Projektor zuverlässig zu halten. Ein Vorteil der erfindungsgemäßen Vorrichtung für eine hängende Befestigung eines Projektors ist hierbei, dass eine Einpunkt-Verbindung mit dem Projektor viel einfacher und schneller hergestellt werden kann als die bekannten Mehrpunkt-Verbindungen. Darüber hinaus ist die erfindungsgemäße Vorrichtung durch die vorgesehene Einpunkt-Verbindung besonders material- und gewichtsparend, sehr kompakt und damit auch optisch wenig störend. Gerade beim Aufhängen eines Projektors im Wohnbereich ist dies von besonderem Vorteil.

Vorteilhafte Ausgestaltungen und Weiterbildungen der Erfindung ergeben sich aus den weiteren Unteransprüchen sowie aus der Beschreibung unter Bezugnahme auf die Figuren der Zeichnung.

Wie beansprucht in Anspruch 1 ist die Verbindungseinrichtung ein Gewinde, bevorzugt genau ein Gewinde aufweist, welches zur Schaffung der Einpunkt-Verbindung mit einem zugeordneten Gewinde des Projektors verschraubbar ist. Dies ermöglicht eine einfache, schnelle und zuverlässige Verbindung mit dem Projektor.

Bei einer besonders vorteilhaften Ausgestaltung der Erfindung ist das Gewinde der Verbindungseinrichtung als ein Stativgewinde ausgebildet. Das Stativgewinde ist bevorzugt als ein UNC-Gewinde (Unified Coarse Thread) mit einem Nenndurchmesser von 1/4 Zoll, entsprechend 6,35 mm, ausgeführt. Ein als UNC-Gewinde mit einem Nenndurchmesser von 1/4 Zoll, entsprechend 6,35 mm, und 20 Gewindegängen je Zoll ausgeführtes Gewinde wird besonders bevorzugt. Mini-Beamer (Pocket- oder Taschenprojektoren) werden oftmals zur Befestigung auf einem Stativ mit einem passenden, am Projektor häufig etwa mittig angeordneten, Muttergewinde mit einem Nenndurchmesser von 1/4 Zoll ausgestattet. Durch diese Ausgestaltung wird die Vorrichtung für eine hängende Befestigung unterschiedlicher Pocket-Projektoren sehr flexibel einsetzbar.

In einer anderen Ausgestaltung kann das Stativgewinde der Verbindungseinrichtung als ein UNC-Gewinde mit einem Nenndurchmesser von 3/8 Zoll, entsprechend 9,525 mm, ausgebildet sein. In diesem Fall wird ein UNC-Gewinde mit einem Nenndurchmesser von 3/8 Zoll, entsprechend 9,525 mm, und 16 Gewindegängen je Zoll, bevorzugt.

Gemäß der Erfindung weist die Verbindungseinrichtung eine Aufnahme sowie einen in der Aufnahme aufnehmbaren und in der Aufnahme schwenkbar bewegbaren Einsatz auf. Bei dieser Ausgestaltung ist das Gewinde der Verbindungseinrichtung an dem Einsatz vorgesehen. Dies ermöglicht ein Schwenken des Projektors, um denselben und damit auch das von dem Projektor projizierte Bild auszurichten.

Gemäß der Erfindung weist der Einsatz einen als Gewindestift ausgebildeten Abschnitt auf. An dem Gewindestift ist hierbei das Gewinde der Verbindungseinrichtung vorgesehen. Die Verbindungseinrichtung der Vorrichtung ermöglicht vorteilhaft ein Verbinden mit einem Projektor, der ein passendes Muttergewinde aufweist, in das der Gewindestift einschraubbar ist.

Gemäß einer weiteren Ausgestaltung weist die Verbindungseinrichtung eine Platte auf. Die Aufnahme ist hierbei als eine Vertiefung in der Platte ausgebildet, wobei eine Innenfläche der Vertiefung und eine Lageroberfläche des Einsatzes jeweils mit einem Abschnitt einer Kugeloberfläche ausgebildet sind. Hierbei steht der als Gewindestift ausgebildete Abschnitt von der Lageroberfläche des Einsatzes ab. Die Platte weist im Bereich der Vertiefung eine Durchgangsöffnung auf, durch die der Gewindestift hindurchführbar ist. Durch Einschrauben des Gewindestiftes in das zugeordnete Gewinde des Projektors kann der Projektor hierbei mit der Verbindungseinrichtung verbunden werden. Vermittelt über die Lageroberfläche des Einsatzes, die als Abschnitt einer Kugeloberfläche ausgebildet ist, kann der Projektor schwenkbar an der Verbindungseinrichtung gelagert werden. Dabei kann die Lageroberfläche des Einsatzes auf der ebenfalls als Abschnitt einer Kugeloberfläche ausgebildeten Innenfläche der Vertiefung gleiten. Die Innenfläche der Vertiefung und die Lageroberfläche des Einsatzes ermöglichen bei einer derartigen Ausbildung darüber hinaus ein Verdrehen des Projektors gegenüber der Verbindungseinrichtung durch Verdrehen des Einsatzes in der Vertiefung um eine Achse, die sich im Wesentlichen entlang einer Längsrichtung der Vertiefung erstreckt.

In einer weiteren Weiterbildung weist die Platte eine Ausbauchung auf, die auf einer ersten Seite der Platte die Vertiefung bildet. Darüber hinaus bildet die Ausbauchung auf einer der ersten Seite gegenüberliegenden zweiten Seite der Platte eine Erhebung. Eine Außenoberfläche der Erhebung ist mit einem Abschnitt einer Kugeloberfläche ausgebildet. Die Verbindungseinrichtung weist darüber hinaus einen mit einer Lageroberfläche ausgebildeten Gegenring auf. Hierbei sind die Außenoberfläche der Erhebung und die Lageroberfläche des Gegenrings zur Anlage aneinander vorgesehen. Bei dieser Ausgestaltung kann beim Einschrauben des als Gewindestift ausgebildeten Abschnitts in das zugeordnete Gewinde des Projektors die Lageroberfläche des Einsatzes gegen die Innenfläche der Vertiefung und die Lageroberfläche des Gegenrings gegen die Außenoberfläche der Erhebung geklemmt werden. Diese Ausgestaltung ermöglicht es somit einerseits, den Projektor gegenüber der Verbindungseinrichtung zu verdrehen sowie innerhalb eines durch geeignete Bemessung der Durchgangsöffnung vorgebbaren Winkelbereichs zu verschwenken, und andererseits, durch mehr oder weniger weites Einschrauben des als Gewindestift ausgebildeten Abschnitts des Einsatzes, den Einsatz, den Gegenring und vermittelt über diesen auch den Projektor mit der Platte zu verklemmen, sodass sich Orientierung und Verschwenkwinkel des Einsatzes gegenüber der Platte nicht mehr von alleine verändern können. In diesem Zustand steht der Projektor bevorzugt am Gegenring an. Die Klemmkraft ist hierbei durch mehr oder weniger weites Einschrauben komfortabel einstellbar.

Bei einer weiteren Ausgestaltung der erfindungsgemäßen Vorrichtung weist der Einsatz einen Handhabungsabschnitt, insbesondere einen rippenförmigen Griff, auf. Mittels des Handhabungsabschnittes ist der Einsatz in der Aufnahme drehbar und schwenkbar. Ferner kann mit Hilfe des Handhabungsabschnitts das Gewinde der Verbindungseinrichtung mit dem zugeordneten Gewinde des Projektors verschraubt werden. Hierdurch lässt sich die Vorrichtung besonders einfach ohne den Einsatz von Werkzeug bedienen. Alternativ kann in einer Variante statt des Handhabungsabschnittes oder des Griffes zum Beispiel auch ein Innensechskant an dem Einsatz vorgesehen sein, wobei in diesem Fall zum Drehen und Schwenken des Einsatzes und zum Einschrauben des Gewindes in das zugeordnete Gewinde des Projektors ein Sechskantschlüssel verwendet wird.

In einer bevorzugten und vorteilhaften Verbesserung der erfindungsgemäßen Vorrichtung weist die Verbindungseinrichtung einen oder mehrere Permanentmagneten auf. Hierbei sind der eine Permanentmagnet oder die mehreren Permanentmagneten derart angeordnet und ausgebildet, dass die Verbindungseinrichtung und der mit der Verbindungseinrichtung durch die Einpunkt-Verbindung verbundene Projektor mittels der Wirkung des Magnetfeldes des einen Permanentmagneten oder der mehreren Permanentmagneten an einem anderen Gegenstand lösbar befestigbar sind. Dies ermöglicht ein komfortables Aufhängen des Projektors an einem Gegenstand, der durch die Wirkung des Magnetfeldes von dem Permanentmagneten der Verbindungseinrichtung angezogen wird. In Betracht kommen beispielsweise Gegenstände, die mit einem geeigneten eisenhaltigen Metall, insbesondere einem geeigneten Stahl, ausgebildet sind. Gerade zur hängenden Befestigung von Mini-Beamern oder Pocket-Projektoren ist eine derartige Weiterbildung der Vorrichtung vorteilhaft, da bei dem vergleichsweise geringen Gewicht derartiger Projektoren mittels der Permanentmagneten einerseits eine zuverlässige Befestigung möglich ist, die Befestigung aber durch eine bedienende Person auch ohne Schwierigkeiten wieder gelöst werden kann.

In einer weiteren Ausgestaltung weist die Vorrichtung ein Basisteil auf, wobei das Basisteil an einem anderen Gegenstand oder einem Gebäudeteil befestigbar ist. Hierbei ist die Verbindungseinrichtung an dem Basisteil lösbar befestigbar. Vorteilhaft kann hierbei das Basisteil beispielsweise an einer Zimmerdecke dauerhaft befestigbar sein, wohingegen die Verbindungseinrichtung zusammen mit dem Projektor nach Bedarf zum Aufhängen des Projektors an dem Basisteil befestigt werden kann und der Projektor auch schnell und komfortabel wieder von der Decke abgenommen werden kann. Dies ist zum Beispiel von Vorteil, wenn der Projektor nicht ständig benötigt wird, sondern nur von Zeit zu Zeit aufgehängt werden soll. Dann kann er aus optischen Gründen für die verbleibende Zeit von der Decke abgenommen werden und anderweitig verstaut werden.

In einer Ausgestaltung weist die Verbindungseinrichtung einen Schlitten auf. Das Basisteil ist hierbei derart ausgebildet, dass die Verbindungseinrichtung durch Einschieben des Schlittens in das Basisteil an dem Basisteil lösbar befestigbar ist. Dies ermöglicht eine kostengünstige Verbindung von Basisteil und Verbindungseinrichtung.

Bei einer anderen vorteilhaften Ausgestaltung sind die Verbindungseinrichtung und das Basisteil derart ausgebildet, dass die Verbindungseinrichtung und der mit der Verbindungseinrichtung durch die Einpunkt-Verbindung verbundene Projektor mittels der Wirkung des Magnetfeldes des einen Permanentmagneten oder der mehreren Permanentmagneten der Verbindungseinrichtung an dem Basisteil lösbar befestigbar sind. Bei dieser Ausgestaltung kann das Basisteil vorteilhaft besonders einfach und von seinem Aussehen her unaufdringlich ausgestaltet werden. Darüber hinaus kann die Verbindungseinrichtung durch die Permanentmagneten besonders einfach und komfortabel an dem Basisteil lösbar befestigt werden. Ein kompliziertes Einfädeln entfällt somit. Dies ist bei einer Deckenmontage vorteilhaft.

In einer Ausgestaltung ist die Vorrichtung als ein Deckenhalter zum Befestigen des Projektors an einer Decke ausgebildet.

Die obigen Ausgestaltungen und Weiterbildungen lassen sich, sofern sinnvoll, beliebig miteinander kombinieren. Weitere mögliche Weiterbildungen, Ausgestaltungen und Implementierungen der Erfindung umfassen auch nicht ausdrücklich genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Inhaltsangabe der Zeichnung

Die vorliegende Erfindung wird nachfolgend anhand der in den schematischen Figuren der Zeichnungen angegebenen Ausführungsbeispiele näher erläutert. Hierbei zeigen:
- Figur 1: eine perspektivische Unteransicht einer Vorrichtung gemäß einem ersten Ausführungsbeispiel der Erfindung;
- Figur 2: eine Unteransicht der Vorrichtung der Figur 1;
- Figur 3: eine Seitenansicht der Vorrichtung der Figur 1 in Richtung A, wie in Figur 2 angedeutet, wobei zusätzlich eine Decke eines Zimmers und ein mittels der Vorrichtung an der Decke befestigter Pocket-Projektor skizziert sind;
- Figur 4: einen Schnitt A'-A' durch die Vorrichtung gemäß dem ersten Ausführungsbeispiel, wie in Figur 3 angedeutet;
- Figur 5: ein Basisteil der Vorrichtung der Figur 1 in einer Unteransicht;
- Figur 6: das Basisteil der Figur 5 in einer Vorderansicht;
- Figur 7: einen Blechzuschnitt für das Basisteil der Figur 5;
- Figur 8: eine Platte einer Verbindungseinrichtung der Vorrichtung der Figur 1 in einer Unteransicht;
- Figur 9: die Platte der Figur 8 in einem Schnitt A"-A", wie in Figur 8 angedeutet;
- Figur 10: die Platte der Figur 8 in einer perspektivischen Unteransicht;
- Figur 11: einen Einsatz der Verbindungseinrichtung der Vorrichtung der Figur 1 in einer Perspektivansicht,
- Figur 12: einen Gegenring der Verbindungseinrichtung der Vorrichtung der Figur 1 in einer Perspektivansicht,
- Figur 13: den Einsatz der Figur 11 in einer Seitenansicht;
- Figur 14: den Einsatz der Figur 11 in einer Vorderansicht;
- Figur 15: den Gegenring der Figur 12 in einer Draufsicht;
- Figur 16: den Gegenring der Figur 12 in einem Schnitt A"'-A"', wie in Figur 15 angedeutet;
- Figur 17: ein Basisteil einer Vorrichtung gemäß einem zweiten Ausführungsbeispiel der Erfindung, in einer Vorderansicht; und
- Figur 18: das Basisteil der Figur 17 in einer Unteransicht in Richtung B.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Hierbei sind die Elemente der Zeichnungen nicht notwendigerweise maßstabsgetreu zueinander gezeigt. Gleiche, funktionsgleiche und gleich wirkende Elemente, Komponenten und Merkmale sind in den Figuren der Zeichnung - sofern nichts anderes ausgeführt ist - jeweils mit denselben Bezugszeichen versehen.

### Beschreibung von Ausführungsbeispielen

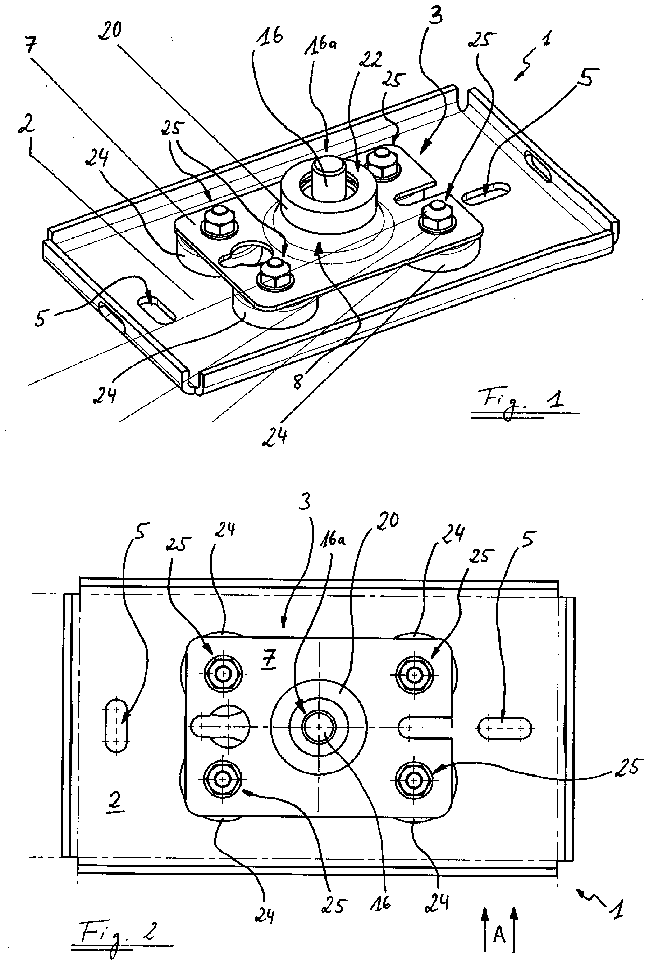

Figur 1 zeigt eine Vorrichtung 1 für eine hängende Befestigung eines in Figur 1 nicht dargestellten Pocket-Projektors PP gemäß einem ersten Ausführungsbeispiel in einer perspektivischen Ansicht von unten. Die Vorrichtung 1 ist als ein Deckenhalter ausgebildet und dient dem Befestigen eines kleinen und, im Vergleich mit herkömmlichen Videoprojektoren, relativ leichten Mini-Beamers, auch Pocket-Projektor genannt, an einer Decke 4 eines Zimmers oder Saales innerhalb eines Gebäudes. Während herkömmliche Projektoren, die an der Decke montiert werden, heutzutage oft noch mehr als 5 kg wiegen, sind derartige Mini-Beamer deutlich leichter und kleiner und wiegen etwa 1 kg bis 2,5 kg.

Die Vorrichtung 1 gemäß Figur 1 weist ein Basisteil 2 und eine an dem Basisteil 2 lösbar befestigbare Verbindungseinrichtung 3 auf.

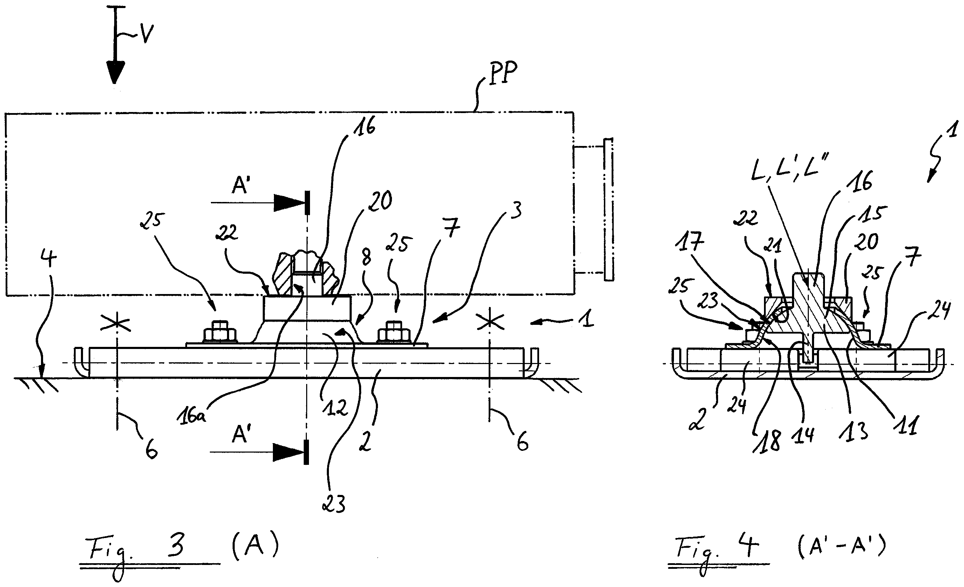

Das Basisteil 2 ist derart ausgebildet, dass es an einem anderen Gegenstand oder einem Gebäudeteil befestigt werden kann. Insbesondere ist das Basisteil 2 dafür vorgesehen, an einer Decke 4 eines Zimmers befestigt zu werden, beispielsweise durch Anschrauben. Zum Durchführen von Befestigungsschrauben 6 ist das Basisteil 2 mit Langlöchern 5 ausgestattet, siehe die Figuren 1, 2, 5 und 7. Figur 3 illustriert das Anschrauben des Basisteils 2 an der Decke 4 mittels schematisch angedeuteter Schrauben 6. Die Langlöcher 5 gestatten hierbei auch ein Justieren des Basisteils 2.

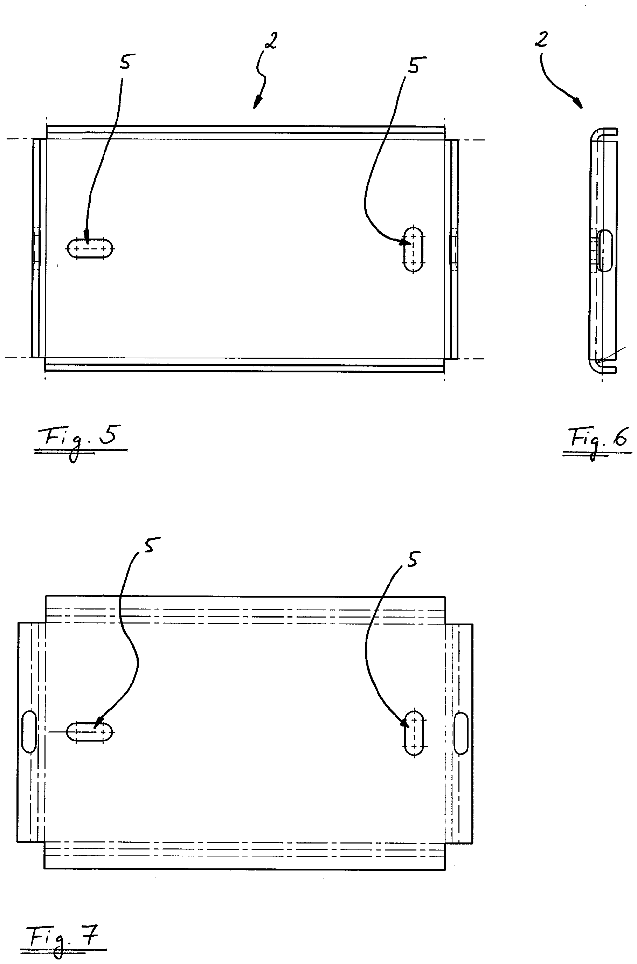

Das Basisteil 2 ist nochmals in den Figuren 5 und 6 skizziert. Zur Versteifung sind die Ränder des im Wesentlichen rechteckig ausgebildeten Basisteils 2 etwa rechtwinklig aufgebogen. Einen geeigneten Zuschnitt für das Basisteil 2, bevorzugt aus Stahlblech, zeigt die Figur 7.

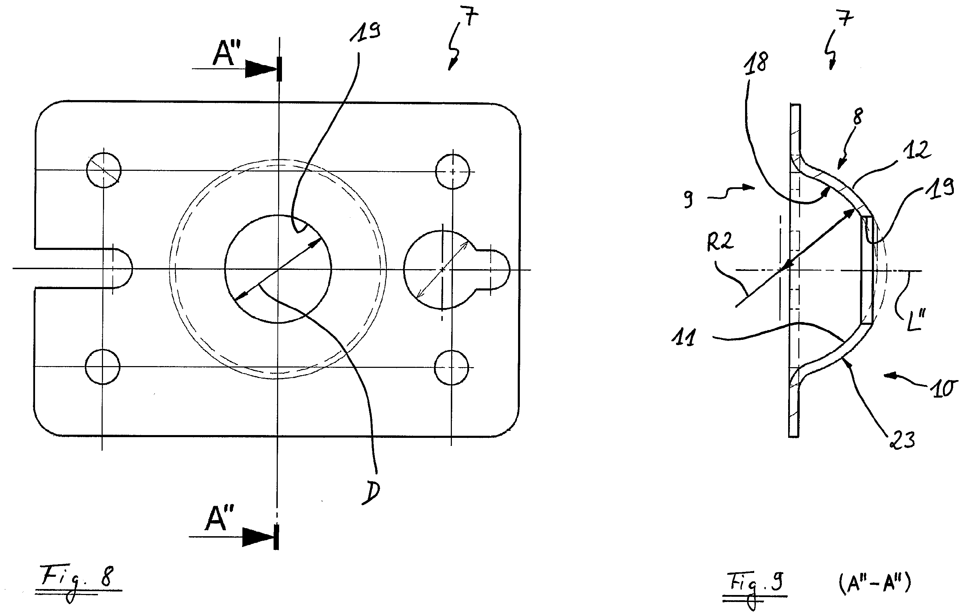

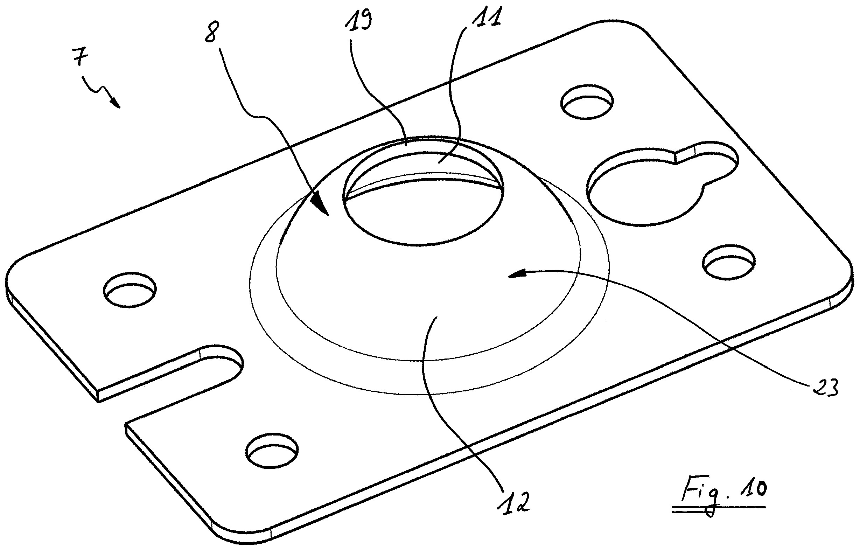

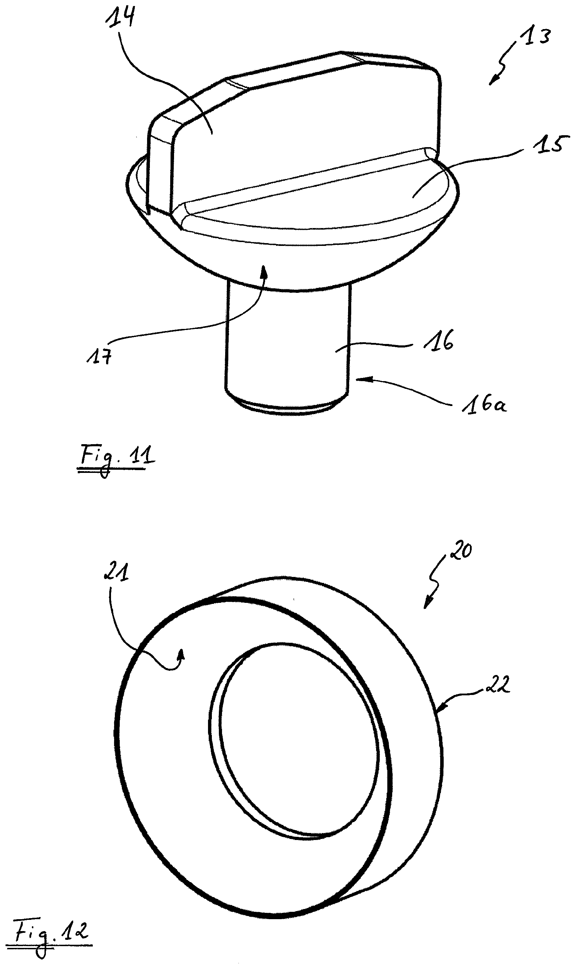

Die Verbindungseinrichtung 3 ist für eine Einpunkt-Verbindung mit dem in Figur 3 schematisch in doppelt strichpunktierter Linie skizzierten Pocket-Projektor PP ausgebildet. Hierzu weist die Verbindungseinrichtung 3 eine Platte 7 auf. Die Platte 7 ist in den Figuren 8, 9 und 10 separat dargestellt. Wie zum Beispiel die Figuren 9 und 10 zeigen, weist die Platte 7 eine im Wesentlichen mittige Ausbauchung 8 auf, die auf einer ersten Seite 9 der Platte 7 eine Vertiefung 11 bildet und auf einer zweiten Seite 10 der Platte 7 eine Erhebung 12 bildet. Hierbei liegen die ersten und zweiten Seiten 9, 10 einander gegenüber. Die Vertiefung 11 dient als Aufnahme zum Aufnehmen eines Einsatzes 13, siehe den Schnitt der Figur 4. Der Einsatz 13 ist im Detail in den Figuren 11, 13 und 14 dargestellt und weist einen als ein rippenförmiger Griff ausgebildeten Handhabungsabschnitt 14, einen Lagerabschnitt 15 und einen als Gewindestift ausgebildeten Abschnitt 16 mit einem als Stativgewinde ausgeführten Gewinde 16a auf. Bei dem gezeigten Einsatz 13 sind die Abschnitte 14, 15 und 16 einstückig miteinander verbunden.

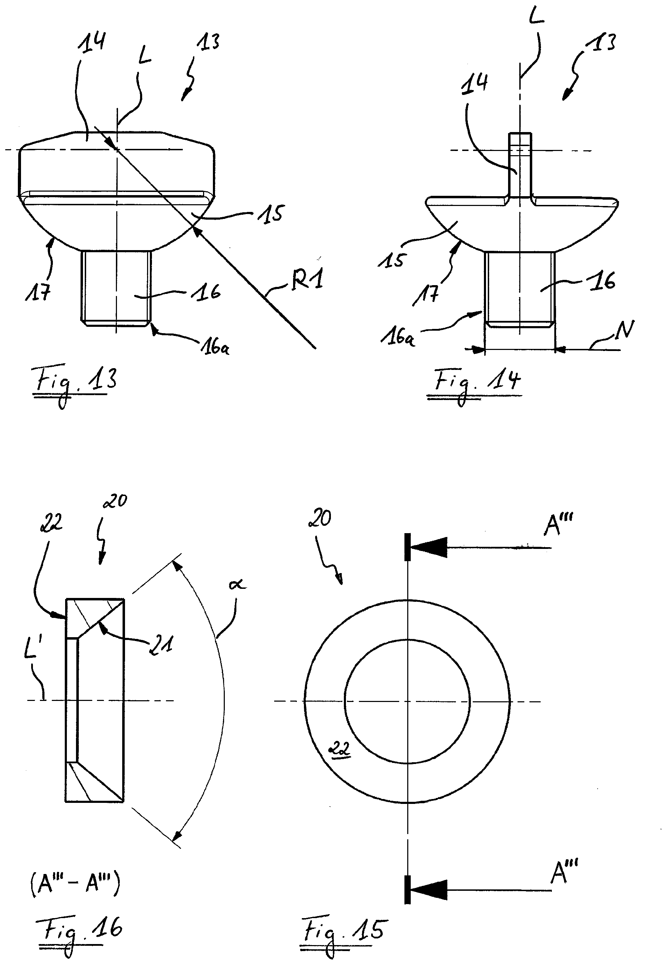

Wie Figur 13 zeigt, steht der Abschnitt 16, der als Gewindestift ausgebildet ist, im Wesentlichen in Richtung einer Längsachse L des Einsatzes 13 von einer an den Lagerabschnitt 15 ausgebildeten Lageroberfläche 17 ab. Die Lageroberfläche 17 ist mit einem Abschnitt einer Kugeloberfläche ausgebildet. Der Radius R1 der Kugeloberfläche beträgt beispielsweise 10 mm.

Die Vertiefung 11 der Platte 7 weist eine Innenfläche 18 auf, die ebenfalls mit einem Abschnitt einer Kugeloberfläche ausgebildet ist. Der Radius R2 der Kugeloberfläche entspricht bevorzugt im Wesentlichen dem Radius R1 und beträgt beispielsweise ebenfalls 10 mm.

Wie Figur 4 weiter zeigt, ist der Einsatz 13 bei der zusammengebauten Vorrichtung 1 derart in der Vertiefung 11 aufgenommen, dass die Lageroberfläche 17 des Einsatzes 13 in Anlage mit der Innenfläche 18 der Vertiefung 11 gelangt. Die Lageroberflächen 17 und 18 können hierbei aufeinander gleiten.

Im Bereich einer Mitte der Vertiefung 11 weist die Platte 7 eine Durchgangsöffnung 19 auf, durch die der als Gewindestift ausgebildete Abschnitt 16 des Einsatzes 13 hindurchgeführt ist. Ein Durchmesser D der vorzugsweise kreisrund ausgebildeten Durchgangsöffnung 19 ist bevorzugt größer als ein Nenndurchmesser N des Gewindes 16a an dem als Gewindestift ausgebildeten Abschnitt 16 (siehe Figur 14) und beträgt beispielsweise 11 mm.

Durch die Ausbildung der Flächen 17 und 18 als Abschnitte von Kugeloberflächen und dadurch, dass der als Gewindestift ausgebildete Abschnitt 16 mit Spiel durch die Durchgangsöffnung 19 hindurchgeführt ist, kann der Einsatz 13 in der Vertiefung 11 einerseits um seine Längsachse L verdreht werden, andererseits kann der Einsatz 13 in der Aufnahme verschwenkt und die Längsachse L dadurch gegenüber der Platte 7 geneigt werden.

Figur 4 zeigt darüber hinaus, dass die Verbindungseinrichtung 3 einen Gegenring 20 aufweist, der in den Figuren 12, 15 und 16 als Einzelteil abgebildet ist. Der Gegenring 20 weist zwei Lageroberflächen 21 und 22 auf. Die Lageroberfläche 22 ist im Wesentlichen als ringförmige, ebene Fläche ausgebildet, die im Wesentlichen senkrecht zu eine Längsachse L' des Gegenrings 20 verläuft. Die Lageroberfläche 21 ist auf einer der Lageroberfläche 22 gegenüberliegenden Seite des Gegenrings 20 vorgesehen und als eine Kegelfläche ausgebildet, wobei der Öffnungswinkel α der Fläche 21 beispielsweise 80° beträgt.

In zusammengebautem Zustand der Vorrichtung 1 liegt die Lageroberfläche 21 des Gegenrings 20 auf einer Außenoberfläche 23 der Erhebung 12 der Platte 7 an. Auch die Außenoberfläche 23 ist vorzugsweise im Wesentlichen als Abschnitt einer Kugeloberfläche ausgebildet.

Figur 1 zeigt ferner, dass die Verbindungseinrichtung 3 der Vorrichtung 1 vier um die Ausbauchung 8 der Platte 7 gleichmäßig herum angeordnete Permanentmagneten 24 aufweist. Die Permanentmagneten 24 sind auf der ersten Seite 9 der Platte 7 (siehe Figur 9) auf die Platte 7 aufgesetzt und durch Verschraubungen 25 mit der Platte 7 verbunden.

Nun soll die Funktion der Vorrichtung 1 für eine hängende Befestigung des Pocket-Projektors PP an der Decke 4 erläutert werden.

Mini-Beamer oder Pocket-Projektoren PP weisen oftmals ein in etwa mittig angeordnetes Stativ-Muttergewinde auf. Zum Montieren des Projektors PP an der Decke 4 wird die Vorrichtung 1 zunächst auseinander genommen, indem das Basisteil 2 von der Verbindungseinrichtung 3 getrennt wird. Mittels des Handhabungsabschnitts 14 des Einsatzes 13 wird der Abschnitt 16, der als Gewindestift ausgebildet ist und das Stativgewinde 16a aufweist, das bevorzugt als ein UNC-Gewinde mit einem Nenndurchmesser N von 1/4 Zoll oder 6,35 mm sowie 20 Gewindegängen je Zoll ausgebildet ist, in das Muttergewinde des Projektors eingeschraubt. Hierzu kann der Einsatz in der Vertiefung 11 mittels des Handhabungsabschnitts 14 gedreht werden. Bei abgenommenem Basisteil 2 ist die Vertiefung 11 leicht zugänglich. Beim Einschrauben des Abschnitts 16 in das Muttergewinde gelangt schließlich die Lageroberfläche 22 des Gegenringes 20 zur Anlage an den Pocket-Projektor PP, wie die Figur 3 zeigt. Durch mehr oder weniger festes Anziehen des Einsatzes 13 kann die Verbindungseinrichtung 3 mehr oder weniger stark gegen den Pocket-Projektor PP geklemmt werden. Die Ausbauchung 8 der Platte 7 wird dabei zwischen dem Gegenring 20 und dem Einsatz 13 eingeklemmt. Zusätzlich kann, wenn der Einsatz 13 nicht zu fest angezogen ist, der mit der Verbindungseinrichtung 3 verbundene Projektor PP um eine Längsachse L" der als Aufnahme dienenden Vertiefung 11 gegenüber der Verbindungseinrichtung 3 verdreht werden und kann zusätzlich auch gegenüber der Verbindungseinrichtung 3 verschwenkt werden, wodurch ein einfaches Ausrichten des Pocket-Projektors PP ermöglicht wird.

Mittels des genau einen Stativgewindes 16a der Verbindungseinrichtung 3 wird somit eine Einpunkt-Verbindung mit dem Projektor PP geschaffen, die sehr leicht mit nur wenigen Handgriffen hergestellt werden kann. Für die hängende Befestigung eines leichten Videoprojektors ist diese Einpunkt-Verbindung voll ausreichend.

Falls ein Projektor mit einem größeren Stativgewinde, beispielsweise dem bei großen Kameras verbreiteten UNC-Gewinde mit einem Nenndurchmesser von 3/8 Zoll oder 9,525 mm und 16 Gewindegängen je Zoll, befestigt werden soll, kann der als Gewindestift ausgebildete Abschnitt 16 des Einsatzes 13 auch mit einem entsprechenden UNC-Gewinde 16a mit einem Nenndurchmesser N von 3/8 Zoll ausgestattet sein. In diesem Falle ist die Durchgangsöffnung 19 der Platte 7 entsprechend größer zu wählen.

Falls die Vorrichtung 1 zur Befestigung eines Projektors mit einem, zum Beispiel im Wesentlichen mittig angeordneten, metrischen Muttergewinde verwendet werden soll, kann das Gewinde 16a auch als ein metrisches Bolzengewinde, beispielsweise als ein Gewinde mit der Nenngröße M6, ausgebildet sein.

Nach dem Verbinden der Verbindungseinrichtung 3 mit dem Pocket-Projektor (oder Mini-Beamer) PP und dem hinreichenden Anziehen des Einsatzes 13 mittels des Handhabungsabschnittes 14 ist das Basisteil 2 an der Decke zu befestigen, beispielsweise anzuschrauben. Hierzu dienen die Langlöcher 5. Anschließend wird der Projektor PP zusammen mit der Verbindungseinrichtung 3 mit dem Basisteil 2 lösbar verbunden, indem die Permanentmagneten 24 auf das Basisteil 2 aufgesetzt werden. Mittels der Wirkung des Magnetfeldes der Permanentmagneten 24 wird die Verbindungseinrichtung 3 und der mit ihr verbundene Projektor PP an dem Basisteil 2 sicher gehalten. Diesen Zustand zeigt die Figur 3. In Figur 3 hängt der Projektor PP, mittels der Vorrichtung 1 befestigt, von der Decke 4. Die ebenfalls eingezeichnete vertikale Richtung V weist vom Boden zur Decke 4.

Der Pocket-Projektor PP kann somit vorteilhaft in ganz besonders einfacher Weise an der Decke 4 befestigt werden. Um den Projektor PP wieder abzunehmen, ist der Projektor PP mit der Verbindungseinrichtung 3 von dem Basisteil 2 mit einer Kraft abzuziehen, die hinreichend ist, um die Magnetkraft zu überwinden. Im Falle eines Mini-Beamers oder Pocket-Projektors PP ist dies für die Bedienerperson kein Problem. Das Basisteil 2 der Vorrichtung 1 gemäß dem ersten Ausführungsbeispiel, wie es in Figur 1 gezeigt ist, stört bei abgenommenem Projektor PP wenig und fällt an der Decke 4 kaum auf. Durch die unaufdringliche Gestaltung des Basisteils 2 und das einfache und komfortable Verbinden der Verbindungseinrichtung 3 mit dem Basisteil 2 eignet sich die Vorrichtung 1 für ein häufiges Aufhängen und Wiederabnehmen des Projektors PP.

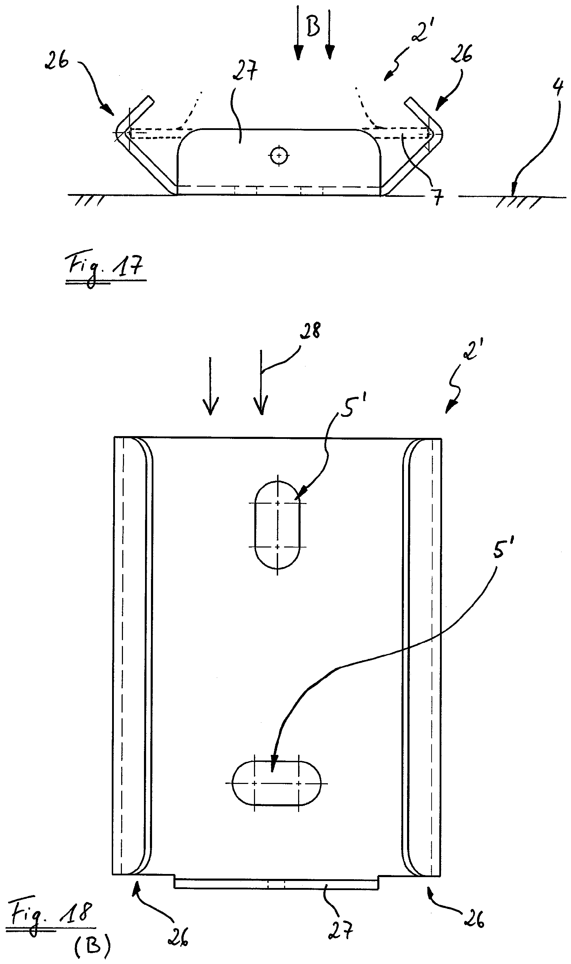

Gemäß einem zweiten Ausführungsbeispiel der Erfindung kann die Verbindungseinrichtung 3 in gleicher Weise wie bei dem ersten Ausführungsbeispiel, jedoch ohne die Permanentmagneten 24 und die zugehörigen Verschraubungen 25, ausgebildet sein. Bei der Vorrichtung 1 gemäß dem zweiten Ausführungsbeispiel ist dann ein modifiziertes Basisteil 2' vorgesehen, welches, wie die Figuren 17 und 18 zeigen, ebenfalls in der Unteransicht im Wesentlichen rechtwinklig ausgebildet ist, wobei lediglich drei Ränder eines Stahlblechzuschnitts aufgebogen sind. Zwei einander gegenüberliegende, zweifach umgebogene Ränder bilden Schienen 26, während an einer dritten Seite des Basisteils 2' ein Anschlag 27 ausgebildet ist. Bei dem Ausführungsbeispiel der Figuren 17 und 18 kann die Verbindungseinrichtung 3 ohne die Permanentmagneten 24 in Pfeilrichtung 28 in das Basisteil 2' eingeschoben werden, wobei die Platte 7 einen Schlitten bildet. Auf diese Weise ist die Verbindungseinrichtung 3 an dem Basisteil 2' ebenfalls lösbar befestigbar. Auch das Basisteil 2' weist Langlöcher 5' zum Befestigen des Basisteils 2' an einer Decke 4 eines Zimmers, insbesondere durch Verschrauben, auf.

Obwohl die vorliegende Erfindung vorstehend anhand bevorzugter Ausführungsbeispiele vollständig beschrieben wurde, ist sie nicht darauf beschränkt, sondern auf vielfältige Art und Weise modifizierbar.

Insbesondere ist die Erfindung nicht auf die in den Figuren gezeigte Anzahl von Magneten beschränkt, sondern es ist auch der Einsatz von mehr oder weniger Permanentmagneten zum lösbaren Verbinden der Verbindungseinrichtung mit dem Basisteil denkbar.

Darüber hinaus ist insbesondere im Falle der magnetischen Verbindung der Verbindungseinrichtung mit dem Basisteil auch eine anders geformte Platte der Verbindungseinrichtung sowie ein anders geformtes Basisteil denkbar. So könnte der Blechzuschnitt für das Basisteil 2 beispielsweise rund ausgebildet sein, und auch die Platte könnte rund ausgebildet sein, wobei dann die Ausbuchtung wiederum mittig auf der Platte vorgesehen sein kann und die Permanentmagneten beispielsweise im Kreis um die Ausbuchtung herum angeordnet sein können.

### Bezugszeichenliste

- 1: Vorrichtung
- 2: Basisteil
- 2': Basisteil
- 3: Verbindungseinrichtung
- 4: Decke
- 5: Langloch
- 5': Langloch
- 6: Schraube
- 7: Platte
- 8: Ausbauchung (Platte)
- 9: erste Seite (Platte)
- 10: zweite Seite (Platte)
- 11: Vertiefung
- 12: Erhebung
- 13: Einsatz
- 14: Handhabungsabschnitt (Einsatz)
- 15: Lagerabschnitt (Einsatz)
- 16: als Gewindestift ausgebildeter Abschnitt (Einsatz)
- 16a: Gewinde
- 17: Lageroberfläche (Einsatz)
- 18: Innenfläche (Vertiefung)
- 19: Durchgangsöffnung (Platte)
- 20: Gegenring
- 21: Lageroberfläche (Gegenring)
- 22: Lageroberfläche (Gegenring)
- 23: Außenoberfläche (Erhebung)
- 24: Permanentmagnet
- 25: Verschraubung
- 26: Schiene
- 27: Anschlag
- 28: Pfeil (Einschieberichtung)
- D: Durchmesser (Durchgangsöffnung)
- L: Längsachse (Einsatz)
- L': Längsachse (Gegenring)
- L": Längsachse (Vertiefung)
- N: Nenndurchmesser (Gewinde)
- PP: Pocket-Projektor
- R1: Radius (Kugeloberfläche)
- R2: Radius (Kugeloberfläche)
- V: vertikale Richtung
- α: Winkel

## Patentansprüche

1. Vorrichtung (1) für eine hängende Befestigung eines Projektors (PP), mit einer Verbindungseinrichtung (3), welche für eine Einpunkt-Verbindung mit dem Projektor (PP) ausgebildet ist,
wobei die Verbindungseinrichtung (3) ein Gewinde (16a) aufweist, welches zur Schaffung der Einpunkt-Verbindung mit einem zugeordneten Muttergewinde des Projektors (PP) verschraubbar ist,
wobei die Verbindungseinrichtung (3) eine Aufnahme sowie einen in der Aufnahme aufnehmbaren und in der Aufnahme schwenkbar bewegbaren Einsatz (13) aufweist, wobei der Einsatz (13) in der Aufnahme drehbar und schwenkbar ist, dadurch gekenzeichnet, dass der Einsatz (13) einen als Gewindestift ausgebildeten Abschnitt (16) aufweist, an dem das Gewinde (16a) der Verbindungseinrichtung (3) vorgesehen ist, und
wobei der Gewindestift in das Muttergewinde des Projektors (PP) einschraubbar ist.

2. Vorrichtung nach Anspruch 1,
**dadurch gekennzeichnet,**
**dass** die Verbindungseinrichtung (3) genau ein Gewinde (16a) aufweist, welches zur Schaffung der Einpunkt-Verbindung mit dem zugeordneten Gewinde des Projektors (PP) verschraubbar ist.

3. Vorrichtung nach Anspruch 1 oder 2,
**dadurch gekennzeichnet,**
**dass** das Gewinde (16a) der Verbindungseinrichtung (3) als ein Stativgewinde, bevorzugt als ein UNC-Gewinde mit einem Nenndurchmesser (N) von 1/4 Zoll oder 6,35 Millimeter, besonders bevorzugt als ein UNC-Gewinde mit einem Nenndurchmesser (N) von 1/4 Zoll oder 6,35 Millimeter sowie 20 Gewindegängen je Zoll, ausgebildet ist.

4. Vorrichtung nach Anspruch 1 oder 2,
**dadurch gekennzeichnet,**
**dass** das Gewinde (16a) der Verbindungseinrichtung (3) als ein Stativgewinde, bevorzugt als ein UNC-Gewinde mit einem Nenndurchmesser (N) von 3/8 Zoll oder 9,525 Millimeter, besonders bevorzugt als ein UNC-Gewinde mit einem Nenndurchmesser (N) von 3/8 Zoll oder 9,525 Millimeter sowie 16 Gewindegängen je Zoll, ausgebildet ist.

5. Vorrichtung nach einem der vorstehenden Ansprüche,
**dadurch gekennzeichnet,**
**dass** die Verbindungseinrichtung (3) eine Platte (7) aufweist und die Aufnahme als eine Vertiefung (11) in der Platte (7) ausgebildet ist, wobei eine Innenfläche (18) der Vertiefung (11) und eine Lageroberfläche (17) des Einsatzes (13) jeweils mit einem Abschnitt einer Kugeloberfläche ausgebildet sind und dass der als Gewindestift ausgebildete Abschnitt (16) von der Lageroberfläche (17) des Einsatzes (13) absteht und die Platte (7) im Bereich der Vertiefung (11) eine Durchgangsöffnung (19) aufweist, durch die der Gewindestift (16) hindurchführbar ist.

6. Vorrichtung nach Anspruch 5,
**dadurch gekennzeichnet,**
**dass** die Platte (7) eine Ausbauchung (8) aufweist, die auf einer ersten Seite (9) der Platte (7) die Vertiefung (11) und auf einer der ersten Seite (9) gegenüberliegenden zweiten Seite (10) der Platte (7) eine Erhebung (12) bildet und dass die Verbindungseinrichtung (3) einen Gegenring (20) aufweist, wobei eine Außenoberfläche (23) der Erhebung (12) mit einem Abschnitt einer Kugeloberfläche ausgebildet ist und wobei die Außenoberfläche (23) und eine Lageroberfläche (21) des Gegenrings (20) zur Anlage aneinander vorgesehen sind.

7. Vorrichtung nach einem der vorstehenden Ansprüche,
**dadurch gekennzeichnet,**
**dass** der Einsatz (13) einen Handhabungsabschnitt (14), insbesondere einen rippenförmigen Griff, aufweist, mittels dem der Einsatz (13) in der Aufnahme drehbar und schwenkbar ist und mittels dem das Gewinde (16a) der Verbindungseinrichtung (3) mit dem zugeordneten Gewinde des Projektors (PP) verschraubbar ist.

8. Vorrichtung nach einem der vorstehenden Ansprüche,
**dadurch gekennzeichnet,**
**dass** die Verbindungseinrichtung (3) einen oder mehrere Permanentmagneten (24) aufweist, wobei der eine Permanentmagnet (24) oder die mehreren Permanentmagneten (24) derart angeordnet und ausgebildet ist/sind, dass die Verbindungseinrichtung (3) und der mit der Verbindungseinrichtung (3) durch die Einpunkt-Verbindung verbundene Projektor (PP) mittels der Wirkung des Magnetfeldes des einen Permanentmagneten (24) oder der mehreren Permanentmagneten (24) an einem anderen Gegenstand lösbar befestigbar sind.

9. Vorrichtung nach einem der vorstehenden Ansprüche,
**dadurch gekennzeichnet,**
**dass** die Vorrichtung (1) ein Basisteil (2; 2') aufweist, wobei das Basisteil (2; 2') an einem anderen Gegenstand oder einem Gebäudeteil (4) befestigbar ist und wobei die Verbindungseinrichtung (3) an dem Basisteil (2; 2') lösbar befestigbar ist.

10. Vorrichtung nach Anspruch 9,
**dadurch gekennzeichnet,**
**dass** die Verbindungseinrichtung (3) einen Schlitten (7) aufweist und das Basisteil (2') derart ausgebildet ist, dass die Verbindungseinrichtung (3) durch Einschieben des Schlittens (7) in das Basisteil (2') an dem Basisteil (2') lösbar befestigbar ist.

11. Vorrichtung nach Anspruch 9 in Verbindung mit Anspruch 8,
**dadurch gekennzeichnet,**
**dass** die Verbindungseinrichtung (3) und das Basisteil (2) derart ausgebildet sind, dass die Verbindungseinrichtung (3) und der mit der Verbindungseinrichtung (3) durch die Einpunkt-Verbindung verbundene Projektor (PP) mittels der Wirkung des Magnetfeldes des einen Permanentmagneten (24) oder der mehreren Permanentmagneten (24) an dem Basisteil (2) lösbar befestigbar sind.

12. Vorrichtung nach einem der vorstehenden Ansprüche,
**dadurch gekennzeichnet,**
**dass** die Vorrichtung (1) als ein Deckenhalter zum Befestigen des Projektors (PP) an einer Decke (4) ausgebildet ist.

## Claims

1. Device (1) for a suspended fixing of a projector (PP), with a connecting element (3) which is designed for a one-point connection with the projector (PP), the connecting element (3) exhibiting a thread (16a) which can be screwed together with an associated nut thread of the projector (PP) to create the one-point connection, the connecting element (3) having a seat and an insert (13) receivable in the seat and being pivotably movable therein, the insert (13) being rotatable and pivotable in the seat, **characterised in that** the insert (13) has a portion (16) provided as a threaded pin on which the thread (16a) of the connecting element (3) is provided, and the threaded pin can be screwed into the nut thread of the projector (PP).

2. Device according to claim 1, **characterised in that** the connecting element (3) exhibits precisely one thread (16a) which can be screwed together with the associated thread of the projector (PP) to create the one-point connection.

3. Device according to claim 1 or 2, **characterised in that** the thread (16a) of the connecting element (3) is provided as a tripod thread, preferably as a UNC thread with a nominal diameter (N) of 1/4 inch or 6.35 millimetres, in particular preferably as a UNC thread with a nominal diameter (N) of 1/4 inch or 6.35 millimetres and 20 thread grooves per inch.

4. Device according to claim 1 or 2, **characterised in that** the thread (16a) of the connecting element (3) is provided as a tripod thread, preferably as a UNC thread with a nominal diameter (N) of 3/8 inch or 9.525 millimetres, in particular preferably as a UNC thread with a nominal diameter (N) of 3/8 inch or 9.525 millimetres and 16 thread grooves per inch.

5. Device according to any one of the preceding claims, **characterised in that** the connecting element (3) exhibits a plate (7) and the seat is provided as a depression (11) in the plate (7), wherein an internal face (18) of the depression (11) and a bearing surface (17) of the insert (13) are each provided with a portion of a spherical surface, and **in that** the portion (16) provided as a threaded pin projects from the bearing surface (17) of the insert (13) and the plate (7) in the region of the depression (11) has a through-opening (19) through which the threaded pin (16) can pass.

6. Device according to claim 5, **characterised in that** the plate (7) has a bulge (8) which forms the depression (11) on a first face (9) of the plate (7) and a raised region (12) on a second face (10) of the plate (7) opposing the first face (9) and **in that** the connecting element (3) has a counter-ring (20), wherein an external surface (23) of the raised region (12) is provided with a portion of a spherical surface and wherein the external surface (23) and a bearing surface (21) of the counter-ring (20) are provided for reciprocal contact.

7. Device according to any one of the preceding claims, **characterised in that** the insert (13) has a handling portion (14), particularly a rib-shaped grip, by means of which the insert (13) is rotatable and pivotable in the seat and by means of which the thread (16a) of the connecting element (3) can be screwed together with the associated thread of the projector (PP).

8. Device according to any one of the preceding claims, **characterised in that** the connecting element (3) has one or more permanent magnets (24), the one permanent magnet (24) or the plurality of permanent magnets (24) being disposed and designed such that the connecting element (3) and the projector (PP) connected thereto by means of the one-point connection can be detachably connected to another object by means of the action of the magnetic field of the one permanent magnet (24) or of the plurality of permanent magnets (24).

9. Device according to any one of the preceding claims, **characterised in that** the device (1) has a base portion (2; 2'), wherein the base portion (2; 2') can be fixed to another object or a building portion (4) and the connecting element (3) can be detachably connected to the base portion (2; 2').

10. Device according to claim 9, **characterised in that** the connecting element (3) exhibits a slide (7) and the base portion (2') is provided such that the connecting element (3) can be detachably connected to the base portion (2') by pushing the slide (7) into the base portion (2').

11. Device according to claim 9 in conjunction with claim 8, **characterised in that** the connecting element (3) and the base portion (2) are provided such that the connecting element (3) and the projector (PP) connected thereto by means of the one-point connection can be detachably connected to the base portion (2) by means of the action of the magnetic field of the one permanent magnet (24) or the plurality of permanent magnets (24).

12. Device according to any one of the preceding claims, **characterised in that** the device (1) is provided as a ceiling mount for fixing the projector (PP) to a ceiling (4) .

## Revendications

1. Dispositif (1) pour une fixation suspendue d'un projecteur (PP), comportant un moyen de liaison (3) qui est réalisé pour une liaison à un point au projecteur (PP),
le moyen de liaison (3) présentant un filetage (16a) lequel, pour créer la liaison à un point, peut être vissé avec un filetage femelle correspondant du projecteur (PP),
le moyen de liaison (3) présentant un logement ainsi qu'un insert (13) pouvant être logé dans le logement et déplaçable de manière pivotante dans le logement, l'insert (12) étant rotatif et pivotant dans le logement, **caractérisé en ce que** l'insert (13) présente une section (16) réalisée en tant que tige filetée, sur laquelle est ménagé le filetage (16a) du moyen de liaison (3), et
la tige filetée pouvant être vissée dans le filetage femelle du projecteur (PP).

2. Dispositif selon la revendication 1,
**caractérisé en ce**
**que** le moyen de liaison (3) présente exactement un filetage (16a), lequel, pour créer la liaison à un point, peut être vissé avec le filetage correspondant du projecteur (PP) .

3. Dispositif selon la revendication 1 ou 2,
**caractérisé en ce**
**que** le filetage (16a) du moyen de liaison (3) est réalisé en tant qu'un filetage pour trépied, de préférence en tant qu'un filetage UNC ayant un diamètre nominal (N) de ¼ de pouce ou 6,35 millimètres, de manière particulièrement préférée en tant qu'un filetage UNC ayant un diamètre nominal (N) de ¼ de pouce ou 6,35 millimètres ainsi que 20 pas de filet par pouce.

4. Dispositif selon la revendication 1 ou 2,
**caractérisé en ce**
**que** le filetage (16a) du moyen de liaison (3) est réalisé en tant qu'un filetage pour trépied, de préférence en tant qu'un filetage UNC ayant un diamètre nominal (N) de 3/8 de pouce ou 9,525 millimètres, de manière particulièrement préférée en tant qu'un filetage UNC ayant un diamètre nominal (N) de 3/8 de pouce ou 9,525 millimètres ainsi que 16 pas de filet par pouce.

5. Dispositif selon l'une quelconque des revendications précédentes,
**caractérisé en ce**
**que** le moyen de liaison (3) présente une plaque (7) et en ce que le logement est réalisé en tant qu'un creux (11) dans la plaque (7), une surface intérieure (18) de le creux (11) et une surface d'appui (17) de l'insert (13) étant respectivement réalisées avec une section d'une surface sphérique, et en ce que la section (16) réalisée en tant que tige filetée fait saillie de la surface sphérique (17) de l'insert (13) et en ce que la plaque (7) présente une ouverture traversante (19) au niveau du creux (11), à travers laquelle la tige filetée (16) peut être guidée.

6. Dispositif selon la revendication 5,
**caractérisé en ce**
**que** la plaque (7) présente un renflement (8), lequel, sur un premier côté (9) de la plaque (7), forme le creux (11), et, sur un deuxième côté (10) de la plaque (7), opposé au premier côté (9), forme une élévation (12), et en ce que le moyen de liaison (3) présente une contre-bague (20), une surface extérieure (23) de l'élévation (12) étant formée par une section d'une surface sphérique, et la surface extérieure (23) et une surface d'appui (21) de la contre-bague (20) étant ménagées pour être appliquées l'une contre l'autre.

7. Dispositif selon l'une quelconque des revendications précédentes,
**caractérisé en ce**
**que** l'insert (13) présente une section de manipulation (14), notamment une poignée en forme de nervure, au moyen de laquelle l'insert (13) est rotatif dans le logement et est pivotant, et au moyen de laquelle le filetage (16a) du moyen de liaison (3) peut être vissé avec le filetage correspondant du projecteur (PP).

8. Dispositif selon l'une quelconque des revendications précédentes,
**caractérisé en ce**
**que** le moyen de liaison (3) présente un ou plusieurs aimants permanents (24), l'un aimant permanent (24) ou les plusieurs aimants permanents (24) étant disposé(s) et réalisé(s) de manière à ce que le moyen de liaison (3) et le projecteur (PP), relié au moyen de liaison (3) par la liaison à un point, puissent être fixés de manière amovible sur un autre objet au moyen de l'action du champ magnétique de l'un aimant permanent (24) ou des plusieurs aimants permanents (24).

9. Dispositif selon l'une quelconque des revendications précédentes,
**caractérisé en ce**
**que** le dispositif (1) présente une pièce de base (2; 2'), la pièce de base (2; 2') pouvant être fixée sur un autre objet ou sur une partie de bâtiment (4), et le moyen de liaison (3) pouvant être fixé de manière amovible sur la pièce de base (2; 2').

10. Dispositif selon la revendication 9,
**caractérisé en ce**
**que** le moyen de liaison (3) présente un chariot (7) et en ce que la pièce de base (2') est réalisée de manière à ce que le moyen de liaison (3) puisse être fixé de manière amovible sur la pièce de base (2') par insertion du chariot (7) dans la pièce de base (2').

11. Dispositif selon la revendication 9 en liaison avec la revendication 8,
**caractérisé en ce**
**que** le moyen de liaison (3) et la pièce de base (2) sont réalisés de manière à ce que le moyen de liaison (3) et le projecteur (PP), relié au moyen de liaison (3) par la liaison à un point, puissent être fixés sur la pièce de base (2) au moyen de l'action du champ magnétique de l'un aimant permanent (24) ou des plusieurs aimants permanents (24) .

12. Dispositif selon l'une quelconque des revendications précédentes,
**caractérisé en ce**
**que** le dispositif (1) est réalisé en tant qu'un support de plafond destiné à fixer le projecteur (PP) à un plafond (4).
